# EUROPEAN PATENT APPLICATION

(11) **EP 4 644 730 A1**
(43) Date of publication of application: **05.11.2025**
(21) Application number: 25173794.6
(22) Date of filing: 30.04.2025
(51) Int. Cl.: F16H 29/08, B62M 11/16, B62M 11/18, B62M 9/02, F16H 35/02, F16H 35/00

(54) **TRANSMISSION WITH VARIABLE SPEED RATIO**

(30) Priority: 03.05.2024 IT 202400009976
(71) Applicant: Hohenegger, Alexander, 06034 Foligno (PG) (IT)
(72) Inventor: Hohenegger, Alexander, 06034 Foligno (PG) (IT)
(74) Representative: Locas, Davide

(57) **Abstract**

A transmission with variable speed ratio, comprising a support structure, an input member, an output member for the rotational motion, a plurality of planetary gears which receive the motion from said input member, a plurality of coupling elements which include a unidirectional coupling mechanism, each of the coupling elements being associated with a respective planetary gear by means of a respective motion conversion mechanism, which draws in rotation the output member. Each of the motion conversion mechanisms comprises a connecting rod element which is hinged to the respective planetary gear and by means of which the motion is transferred to the first coupling element. The transmission comprises a plurality of variation devices for a distance between a hinging axis of the connecting rod element to the respective planetary gear and a respective rotation axis of the planetary gear, each of the variation devices of the distance being associated with a respective planetary gear and a relevant runner, on which said rod element is hinged. The transmission also comprises at least one actuation device for the variation of said distance which comprises an actuation element which is movable in a linear direction and connected to a lever which makes the runner slide in the related guide.

## Description

The invention relates to a transmission with a variable speed ratio of the infinitely variable transmission ratio type.

In the field of continuously variable transmissions, in which the transmission ratio between the input shaft and output shaft can vary seamlessly between two limit values, solutions are known that allow this transmission ratio to be brought down to a value of zero. These transmissions are commonly called infinitely variable transmissions or IVTs.

However, many of the known solutions use particularly complex gear kinematics, which makes them *de facto* not very versatile and intended for an extremely limited number of industrial applications.

For example, patent application WO 2014/023926 provides for the combined use of gear wheels, universal joints and helical screws, a solution that is difficult to implement and easily prone to breakage.

A further example is described in US 6,354,976 in which an infinitely variable transmission is described in which eccentric elements within the kinematic chain are used, resulting in an imbalance that stresses the bearings supporting the input and/or output shafts of the transmission.

Instead, patent application US 2014/0248990 envisages the use of planetary gears both inside and outside of a ring gear, which requires radial encumbrances that make the transmission impractical for many applications.

A solution that partially overcomes these limitations is described in international patent application WO 2017/093965. This refers to a transmission with a variable speed ratio comprising a support structure, an input member, an output member and a plurality of planetary gears pivotally supported on the support structure that receive motion from the input member. Each of the planetary gears comprises a connecting rod which is rotatably connected to it at one of its first ends and which supports a unidirectional coupling wheel at its opposite end, which draws the output member in rotation. The transmission also comprises a device for varying the distance between the hinge axis of the connecting rods and the respective rotation axis of the planetary gears.

However, there is a need to make the mechanism in this document more compact and, in particular, more effectively integrated into bicycles or other types of vehicles. Furthermore, the Applicant found that an improvement in transmission performance can be achieved by making the output torque trend more linear, which, due to the presence of the unidirectional coupling wheel, has a discontinuous trend. Therefore, the problem at the basis of the present invention is that of making available an infinitely variable transmission that is structurally and functionally conceived to at least partly obviate one or more of the drawbacks expressed in reference to the mentioned known art.

Within the scope of this problem, the aim of the present invention is to provide a transmission with a variable speed ratio that is particularly suitable for use in bicycles and, in particular, electric bicycles.

A further aim is to make available a transmission with a variable speed ratio in which the transmission ratio variation mechanism is compact and can be contained within the same enclosure containing the remaining components of the transmission, or at least the main ones.

It is also an aim of the present invention to provide a transmission that improves on known solutions in the context of a compact, reliable and relatively low-cost solution. This problem is, at least in part, solved, and at least one of the aforementioned purposes is, at least in part, achieved by the present invention, in a first aspect thereof, by means of a transmission with a variable speed ratio comprising a support structure, an input member of a rotational motion about a main rotation axis rotatably connected to said support structure, and an output member of the rotational motion.

Preferably, the transmission comprises a plurality of planetary gears rotatably supported on the support structure and receiving motion from said input member. Preferably the planetary gears are arranged peripherally to the main rotation axis. The transmission preferably comprises a plurality of coupling elements. Each of the coupling elements is preferably associated with a respective planetary gear via a respective motion transformation mechanism.

Preferably, the coupling elements comprise a first body, preferably in the form of a bushing, connected to the motion transformation mechanism, a second body, preferably in the form of a shaft, configured in such a way as to draw said output member in rotation, and a unidirectional coupling mechanism configured in such a way as to connect said first body to said second body in a rotational direction only. Each of said motion transformation mechanisms is preferably associated with the respective planetary gear in such a way as to transform a rotational motion of the respective planetary gear into a rotation of said first body with respect to said second body in one rotation direction and, preferably, into a further rotation of said first body with respect to said second body in the opposite direction.

Each of these motion transformation mechanisms preferably comprises a connecting rod element hinged to the respective planetary gear and through which motion is transferred to said first body.

Preferably, the transmission also comprises a plurality of devices for varying a distance between a hinge axis of said connecting rod element on the respective planetary gear and a respective rotation axis of the planetary gear. Preferably each of the distance variation devices is associated with a respective planetary gear. The present invention has some significant advantages. One of the main advantages achieved is that it is possible to provide a compact structure in which the output torque can have a less discontinuous trend than in known solutions.

According to a further aspect, each of the variation devices preferably comprises a respective guide integral with the respective planetary gear, a related runner, on which said connecting rod element is preferably hinged.

The transmission preferably comprises at least one actuation device for moving said runner along said guide.

Said actuation device comprises an actuation element movable in a linear direction, said linear direction being preferably substantially parallel to said main rotation axis. Preferably said actuation element is connected to a lever and is configured in such a way as to rotate said lever with respect to a related fulcrum preferably by displacement in said linear direction. Preferably said lever comprises an end connected to said runner in such a way that it slides along said guide by means of relative rotation.

Thanks to one or more of the above-mentioned features, it is possible to provide a structure that allows the above-mentioned distance to be varied by means of an actuation parallel to the main axis of the transmission, thus enabling a compact structure that can be easily implemented in a single mechanical component.

In yet another aspect, said connecting rod element preferably comprises a flexible or folding arm connected to said first body, preferably at a peripheral portion thereof. Preferably, said arm is formed by a chain.

In particular, these features provide the advantage of being able to achieve a more linear response by adopting motion transformation mechanisms comprising a connecting rod element associated with a flexible or folding arm connected to said first body.

According to a third aspect, the planetary gears are formed by elliptical gears. The input member preferably comprises an additional elliptical gear configured to transmit the input motion to said planetary gears.

This aspect also contributes to a more linear response, particularly when combined with one or more features of the above aspect.

The present invention in one or more of the above-mentioned aspects may also have one or more of the following preferred features in addition to those previously mentioned.

Preferably, the actuation device comprises a connecting element which is rotatably secured in a sliding manner to said actuation element in said linear direction and in a floating manner in the direction transverse thereto.

In some embodiments, said actuation element comprises an endless screw and a screw nut that can be actuated linearly in said linear direction by rotation of said endless screw. Preferably, said actuation device comprises an electric motor for the rotational actuation of said endless screw.

These features each contribute to the provision of a compact actuation system that can be operated by an electric motor, and thus remotely actuated by the user. Preferably, said support structure comprises a shaft preferably configured in such a way as to be secured at opposite ends to respective opposite sides of a bicycle.

In some embodiments, said input member comprises a pinion arranged at one end of said shaft.

Preferably, said output member comprises connection means with respect to a drive wheel, said connection means preferably comprising a ring which is provided with holes for fixing spokes for spoked wheel.

These features contribute to making the transmission particularly suitable for use in bicycles, making it suitable for use at the rear wheel hub of the bicycle.

Preferably, the transmission comprises a first group of coupling elements, motion conversion mechanisms and distance variation devices and a second group of coupling elements, motion conversion mechanisms and distance variation devices, the first and second groups being arranged in the region of respective opposite ends of said shaft.

The above arrangement provides a symmetrical structure, with advantages in terms of space, weight and efficiency of use.

In some embodiments, said actuation device is interposed between said first group and said second group and is configured in such a way as to simultaneously actuate a lever of the distance variation device of the first group and a respective lever of the distance variation device of the second group, making particularly advantageous use of the mechanism's structure.

Preferably said second body of said coupling elements comprises a connection shaft which extends between one of the coupling elements of the first group and a respective coupling element of the second group, said connection shaft preferably being common to corresponding coupling elements of the first group and the second group.

In some embodiments, each planetary gear is associated with a respective support disk which is connected in terms of rotation to said planetary gear by means of a respective connection shaft, said variation device for the distance and said connecting rod element being supported on said support disk.

Preferably the transmission comprises a respective support disk for each of the first group and second group, the support disk of a group being joined in terms of rotation to the support disk of the other group by means of said connection shaft.

These features also contribute to optimal utilisation of the symmetrical two-group transmission arrangement.

In some embodiments, said connection shaft comprises a seat at which said connection element slides.

Preferably, said connection element comprises a disk-like element which is fixedly joined in terms of rotation to a respective planetary gear and, preferably, with said connecting shaft, said disk-like element being secured, in a sliding manner with respect to a rotation about said axis, to said actuation element and, preferably, to said screw nut.

Preferably said screw nut comprises a pair of prongs between which said disk-like element is arranged.

Thanks to this feature, the lever can be controlled via a system integral to the support structure of the transmission, simplifying its construction and allowing an electrical connection for a possible motorised actuation.

In some embodiments, each of said second bodies rotates with respect to a respective rotation axis which is parallel with said main rotation axis and different from said main rotation axis and rotation axis of the planetary gear.

The characteristics and advantages of the invention will become clearer from the detailed description of an embodiment illustrated, by way of non-limiting example, with reference to the appended drawings wherein:
Figure 1 is a perspective view of the transmission according to the present invention;

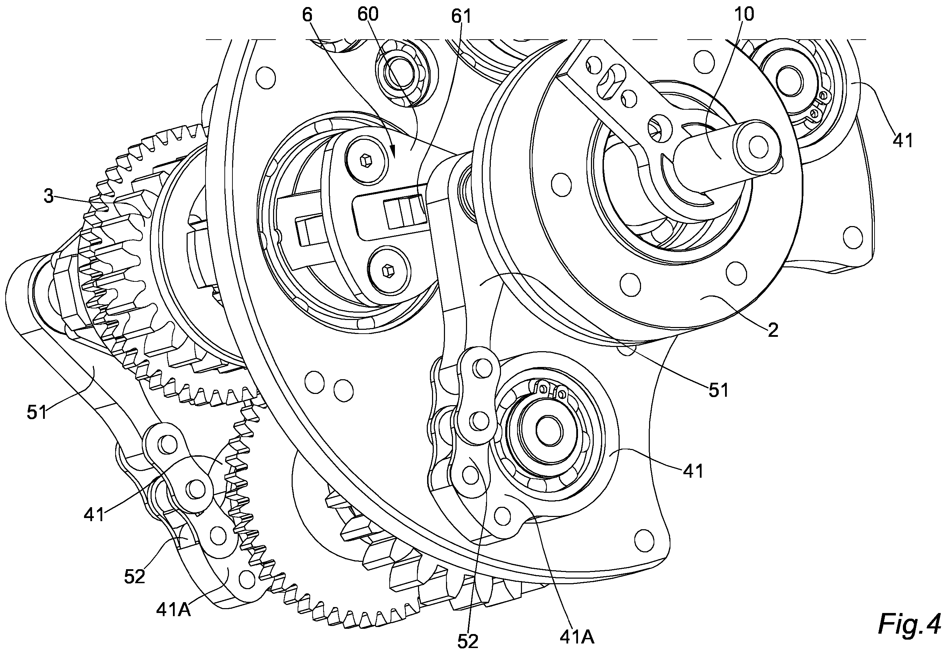

Figures 2, 3 and 4 are perspective views, from different points of view, of the transmission according to the present invention from which certain components have been removed for better illustrative clarity of the internal components;
Figures 5 and 6 are two axial cross-sections, according to section planes V-V and VI-VI respectively, of the transmission according to the present invention;
   and
Figure 7 is a cross-sectional view according to the plane of section VII-VII.

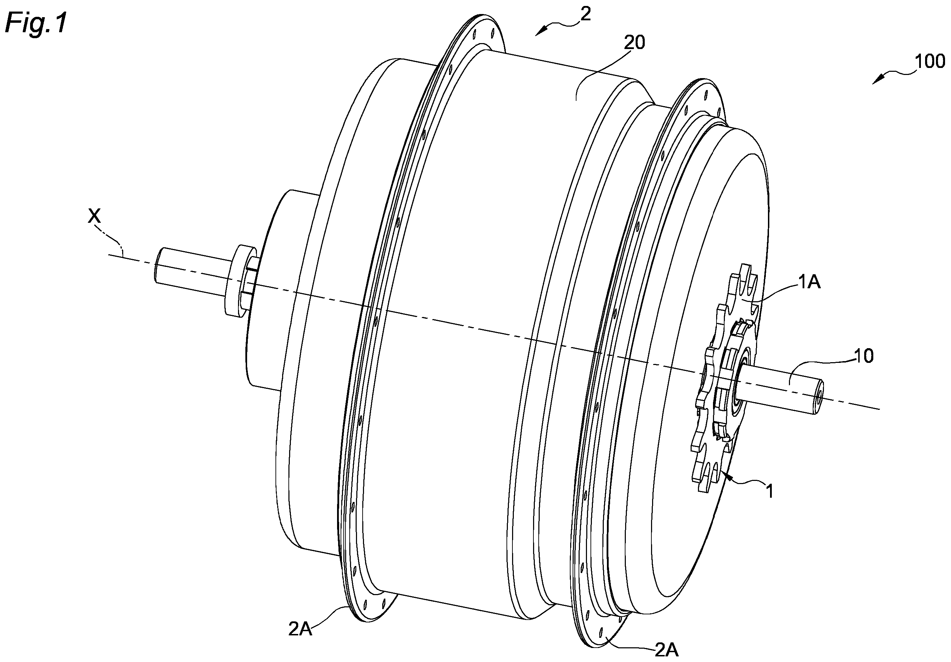

Referring initially to Figure 1, a transmission with a variable speed ratio is indicated as a whole by the reference number 100.

The transmission 100 according to the present invention comprises an input member 1 for rotational motion about a main rotation axis X which, in the present embodiment, comprises a pinion 1A receiving motion from a chain, not shown in the figure.

However, as will become evident later, the same concepts can also be applied in the case where the input member comprises a wheel suitable for receiving motion from a belt, or is defined by an input shaft motion parallel to the axis X.

The transmission according to the present invention further comprises a support structure 10 on which the input member 1 is rotatably supported on the support structure 10 about the main rotation axis X.

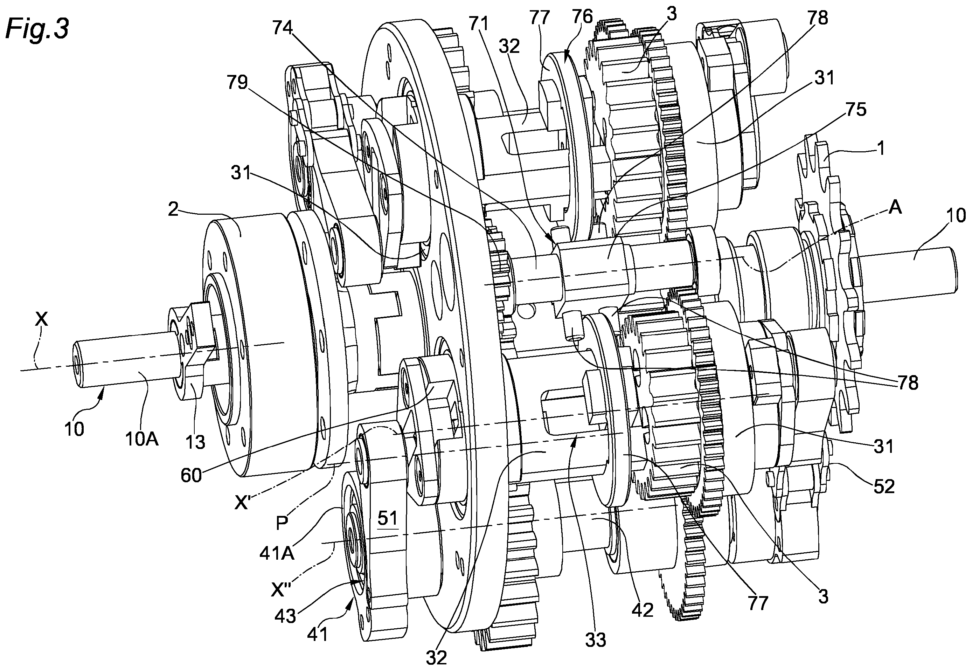

The support structure 10 advantageously comprises a shaft 10A configured to be secured at opposite ends to respective opposite sides of a bicycle. In other words, the shaft 10A forms the axle, which can be attached to the rear fork of the bicycle, around which the bicycle wheel turns. If necessary, the shaft 10A can be fixed to the bicycle frame by means of a radial support 13, which prevents it from rotating, the latter radial support 13 also being illustrated in Figure 3.

The transmission of the present invention transmits the motion received by the pinion 1A, or another possible input member 1, to an output member 2 which, in the case of cycling applications, may be implemented by a ring equipped with holes for attaching wheel spokes. More generally, it can be envisaged that connection means 2A of various types will be used to supply the output motion to a wheel or other rotating component, in the event of different types of applications.

The use of a casing 20, illustrated in Figure 1 and preferably rotationally integral with the output member, to which the connection means 2A are attached and within which the transmission components, better described below, are advantageously housed, can also be provided.

The casing can be essentially cylindrical in shape and essentially define the wheel hub to which the transmission of the present invention is applied.

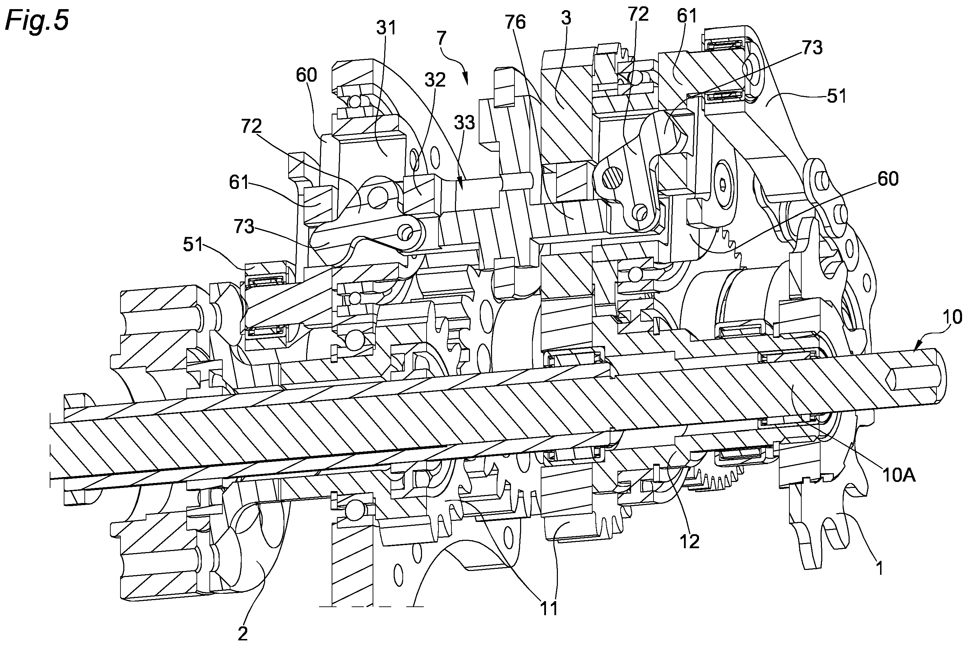

Referring now also to Figure 5, in some embodiments, the input motion transmitted via the pinion 1A is transmitted to a gear 11, preferably inside the casing 20. Preferably the gear 11 is of the elliptical type.

The motion can be transmitted via a hollow shaft 12, which is rotatably supported on the shaft 10A.

From the gear 11, motion is then transmitted to a plurality of planetary gears 3, one of which can be seen in the section of Figure 5, and which are rotatably supported on the support structure 10 itself.

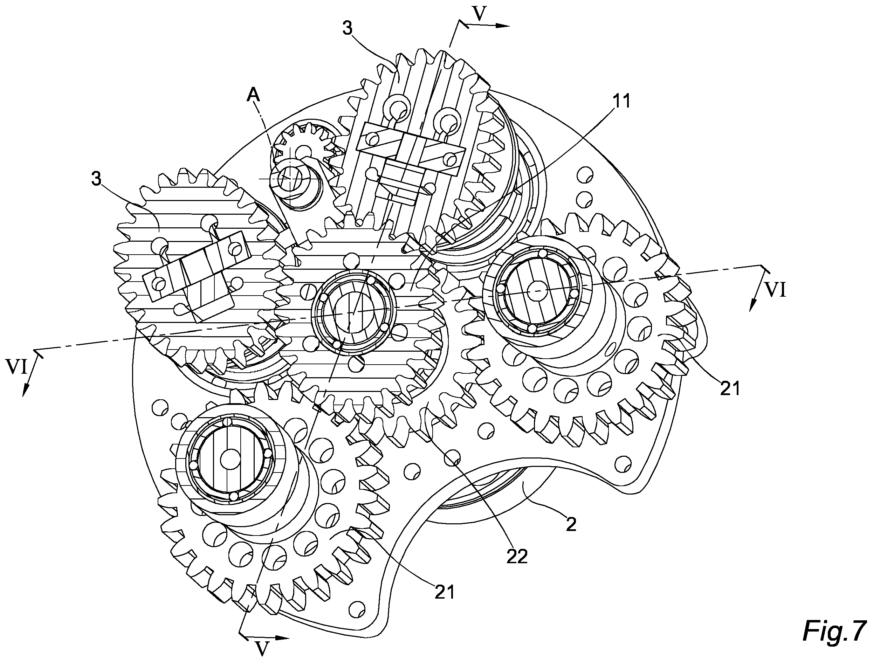

As can be seen from Figure 3, the planetary gears 3 are arranged peripherally to the main rotation axis X and define a respective rotation axis referred to as the axis X'. Each of the respective axes X' is advantageously parallel to the main rotation axis X. In preferred embodiments, the planetary gears 3 also consist of elliptical gears, which engage with the gear 11 connected to the input member 1, as for example shown in Figure 7.

Also from this figure, it can be seen that the aforementioned gears are arranged in phase, i.e. the teeth of the gear 11 are always held in engagement with the teeth of the elliptical gears with which it is associated.

Each of the planetary gears 3 is associated with a respective motion transformation mechanism 5 by means of which the rotational motion of the gears 3 is transmitted to a respective coupling element 4 in a manner described in greater detail below.

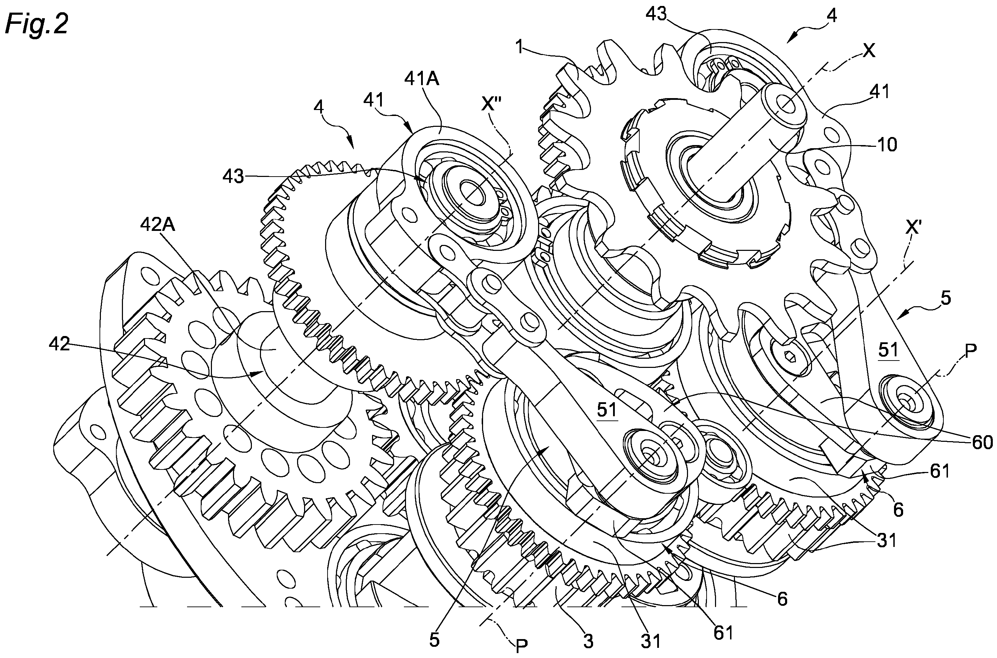

Indeed, with reference to Figure 2, it will be observed that the planetary gears 3 transmit their rotational motion to a support disk 31 via a respective connection shaft 32.

A connecting rod element 51 included in the motion transformation mechanism 5 mentioned above is in turn supported on the support disk 31 in an eccentric position with respect to the rotation axis X'.

Advantageously, the connecting rod element 51 comprises a flexible or folding arm 52 connected to the coupling element 4.

In particular, the arm 52, which is advantageously implemented in the form of a chain, is connected to a bushing 41A, which defines a first body 41 of the coupling element, rotatable with respect to a rotation axis X" parallel to the axis X'.

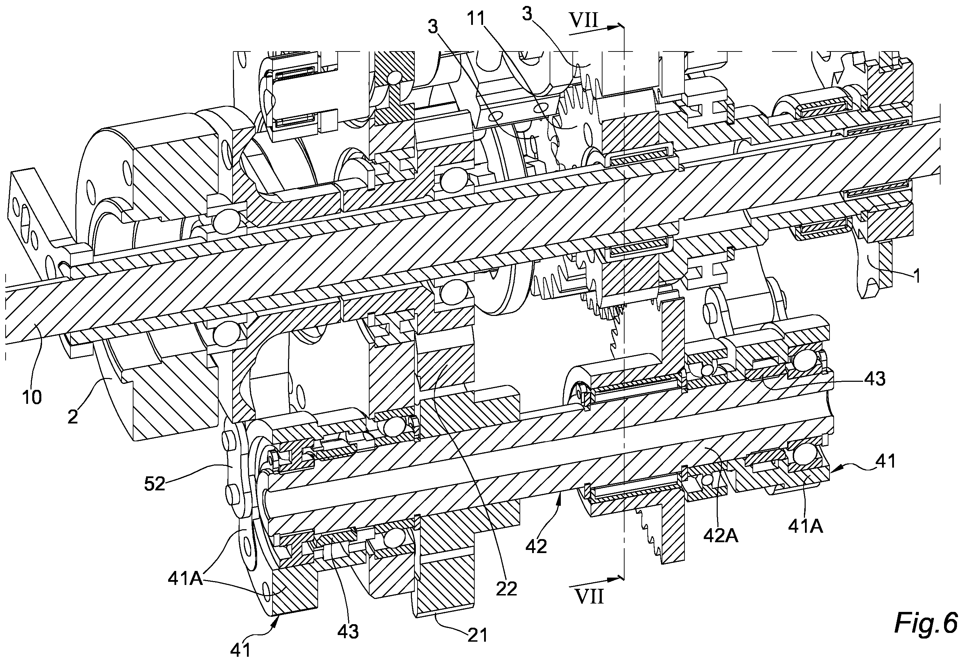

The arm 52 is connected to the bushing at a peripheral portion 41A of the bushing, in such a way that moving the arm 52 towards and away from it results in a rotation in one direction or the other of the bushing, or more generally of the first body 41, with a movement substantially in the form of a rod and crank. These components are also illustrated in an embodiment in Figure 6.

However, it should be noted that the coupling element 4 comprises a unidirectional coupling mechanism 43 that transmits the rotation of the first body 41 to a second body 42, preferably formed by a connecting shaft 42A, in one direction of rotation only.

The support disk 31 and the motion transformation mechanism 5 are thus configured in such a way as to transform a rotational motion of the respective planetary gear 3 into two distinct rotations of the first body 41 with respect to the second body 42: one around the axis X" in one direction of rotation and one, again around the axis X", but in the opposite direction of rotation.

However, since the coupling element 4 comprises the unidirectional coupling mechanism 43, only rotation in one direction will be transmitted to the second body 42.

It will then be appreciated that by modifying the amplitude of the two aforementioned rotations, the amplitude of the rotation transmitted through the motion transformation mechanism 5 can be varied accordingly.

For this purpose, the transmission of the present invention comprises a device 6 for varying the distance d between the hinge axis P of the connecting rod element 51 and the rotation axis X' of the planetary gear 3.

The hinge axis P is preferably parallel to the other rotation axes, i.e. the main axis X and the rotation axes X' of the planetary gears and X" of the shaft 42A. These axes are also preferably distinct from each other.

Preferably, the device 6 for varying the distance d comprises a respective guide 60 which is fixedly joined to each planetary gear 3 and a relevant runner 61, on which the connecting rod element 51 is hinged. It will be appreciated that the distance variation device 6 and the connecting rod element 51 can both be advantageously supported on the respective support disk 31.

As can be seen from Figure 6, the motion thus obtained is transmitted via the connection shaft 42A, or more generally by the second body 42, to the output member 2.

For this purpose, a further gear system may be provided comprising gears 21 splined to the respective connecting shaft 42A and a motion combination gear 22, fixedly joined and preferably coaxial to the output member 2.

As can again be seen from Figure 7, the gears 21 can be peripheral to the combination gear 22 and engage simultaneously thereon.

Referring now to Figure 3, it should be noted that in preferred embodiments, the transmission comprises a first group of coupling elements, motion conversion mechanisms and distance variation devices, and a second group of coupling elements, motion conversion mechanisms and distance variation devices arranged in the region of respective opposite ends of said shaft 10A.

In other words, the transmission can be symmetrical, i.e. provide a kinematic system similar to the one illustrated above for each side of the shaft 10A.

In this case, some of the components of the two groups may be common. In fact, the connection shaft 42A may preferably be common between the first and second group. The shaft 42A can then extend between one of the coupling elements of the first group and a respective coupling element of the second group, thus making them fixedly joined in terms of rotation.

Similarly, the support disk 31 of the first group can be fixedly joined in terms of rotation to the corresponding support disk of the other group via a respective connection shaft 32.

In this way, the output motion results from the combination of a greater number of motion transformation mechanisms and the related coupling elements, making the transmission of output torque smoother. In the embodiment shown in the figures, for example, there are four motion conversion mechanisms, two on each side of the transmission.

The variation of the distance between the hinge axis P and the rotation axis X' of the planetary gear 3 is implemented by means of an actuation device 7 capable of carrying out the movement of the runner 61 along the guide 60.

The actuation device 7 is illustrated in a preferred embodiment thereof in Figures 3 and 5.

In fact, as can be seen from Figure 3, the actuation device 7 preferably comprises an actuation element 71 movable in a linear direction A, which is substantially parallel to the main rotation axis X.

The actuation element 71 is in turn connected to a lever 72, the latter better illustrated in Figure 5, and is configured in such a way as to rotate the lever 72 with respect to a relevant fulcrum.

Preferably, the rotation of the lever is achieved by moving the actuation element 71 in said linear direction A.

Again with reference to Figure 3, note that the lever 72 may comprise an end 73 connected to the runner 61 in such a way that it slides along the guide 60 when the lever rotates.

Therefore, this movement varies the hinge position of connecting rod element 51, bringing it closer to or further away from the axis X'. The guide 60 extends advantageously in a radial direction with respect to this axis.

Referring now again to Figure 5, in some embodiments, the actuation device 7 further comprises a connection element 76 which is rotatably connected to the lever 72 and secured in a sliding manner to the actuation element in said linear direction A and in a floating manner in the direction transverse thereto.

In some embodiments, the connection shaft 32 may comprise a seat 33 at which the connecting element 76 slides.

This embodiment is particularly advantageous in the case of a symmetrical configuration, with a single connection element operating both levers.

More generally, it should be noted that in some embodiments, the actuation device 71 can be interposed between the first group and the second group and can be configured in such a way as to simultaneously actuate the lever of the distance variation device of the first group and the corresponding lever of the distance variation device of the second group, as can be seen in the embodiment in Figure 5. Referring now again to Figure 3, the actuation element 71 may be of the endless screw type 74, i.e. using a nut 75 actuated by rotation of the screw 74 in the linear direction A. The rotation of the screw 74 can be implemented by means of an electric motor, not illustrated in the figure, which for example drives an intermediate gear 79, also visible in Figure 3.

Preferably, the connection element 76 comprises a disk-like element 77 which is fixedly joined in terms of rotation to a respective planetary gear 3 and a respective connection shaft 32.

The disk-like element 77 is secured, in a sliding manner with respect to a rotation about said axis X', to the said nut 75.

For this purpose, the nut can be provided with a respective pair of prongs 78 between which the disk-like element 77 is arranged.

The rotation of the endless screw 74 thus causes a displacement of the nut 75 along the axis A and the prongs 78 draw the disk-like element 77 and the related connection element 76 without impeding its rotation. This actuation can thus be carried out with the transmission gears moving, thus achieving the desired transmission ratio variation.

The invention thus solves the proposed problem while achieving a plurality of advantages. The transmission 100 allows an infinite speed ratio between the input member 1 and output member 2 with a simple and reliable solution.

The overall dimensions can also be easily contained in both the axial and radial directions.

The same inventive concepts also lend themselves to use with different geometries, thus making the transmission according to the present invention suitable for many applications, such as in the automotive sector, in bicycles, or as a gearbox for wind turbines.

## Claims

1. Transmission (100) with variable speed ratio, comprising:
- a support structure (10);
- an input member (1) for a rotational motion about a main rotation axis (X) which is rotatably connected to said support structure (10);
- an output member (2) for the rotational motion;
- a plurality of planetary gears (3) which are arranged circumferentially relative to the main rotation axis (X) and which are rotatably supported on said support structure (10) which receive the motion from said input member (1);
- a plurality of coupling elements (4), each one being associated with a respective planetary gear (3) by a respective motion conversion mechanism (5), said coupling elements (4) comprising a first body (41) which is connected to said motion conversion mechanism (5), a second body (42) which is configured so as to draw in rotation said output member (2) and a unidirectional coupling mechanism (43) which is configured so as to rotationally connect said first body (41) to said second body (42) only in one rotational direction;
- each of the motion conversion mechanisms (5) being associated with the respective planetary gear (3) so as to convert a rotational motion of the respective planetary gear (3) into a rotation of said first body (41) with respect to said second body (42) in one rotation direction and into another rotation of said first body (41) with respect to said second body (42) in the opposite direction, each of said motion conversion mechanisms (5) comprising a connecting rod element (51) which is hinged to the respective planetary gear (3) and by which the motion is transferred to said first body (41);
- a plurality of variation devices (6) for variation of a distance (d) between a hinging axis (P) of said connecting rod element (51) to the respective planetary gear (3) and a respective rotation axis (X') of the planetary gear (3), each of said variation devices (6) being associated with a respective planetary gear (3) and comprising a respective guide (60) which is fixedly joined to each planetary gear (3), a respective runner (61), on which the connecting rod element (51) is hinged;
- at least one actuation device (7) for moving said runner (61) along said guide (60);
**characterized in that** the actuation device (7) comprises an actuation element (71) which is movable in a linear direction (A), said linear direction being substantially parallel with the main rotation axis (X), said actuation element (71) being connected to a lever (72) and being configured so as to rotate said lever (72) with respect to a respective fulcrum by moving in said linear direction, said lever comprising an end (73) which is connected to said runner (61) so as to make it slide along said guide (60) by means of relative rotation.

2. A transmission (100) according to claim 1, wherein the actuation device (7) comprises a connection element (76) which is rotatably connected to said lever (72) and secured in a sliding manner to said actuation element in said linear direction (A) and in a floating manner in the direction transverse thereto.

3. A transmission (100) according to any one of the preceding claims, wherein said actuation device (71) comprises an endless screw (74) and a screw nut (75) which can be actuated linearly in said linear direction (A) by rotation of said endless screw (74).

4. A transmission (100) according to the preceding claim, wherein said connection element (76) comprises a disk-like element (77) which is fixedly joined in terms of rotation to a respective planetary gear (3), said disk-like element (77) being secured, in a sliding manner with respect to a rotation about said respective rotation axis (X') of the planetary gear (3), to said actuation element (71) and preferably to said screw nut.

5. A transmission (100) according to the preceding claim, comprising a first group of coupling elements, of motion conversion mechanisms and of variation devices and a second group of coupling elements, of motion conversion mechanisms and of variation devices, wherein said actuation device (71) is interposed between said first group and said second group and is configured so as to simultaneously actuate a lever of the variation device for the distance of the first group and a respective lever of the variation device for the distance of the second group.

6. A transmission (100) according to claim 5, wherein said second body (42) of each of said coupling elements comprises a connection shaft (42A) extending between one of the coupling elements of the first group and a respective coupling element of the second group.

7. A transmission according to any one of the preceding claims, wherein each planetary gear (3) is associated with a respective support disk (31) which is connected in terms of rotation to said planetary gear (3) by a respective connection shaft (32), said variation device (6) for the distance and said connecting rod element (51) being supported on said support disk (31).

8. A transmission according to the preceding claim, comprising a respective support disk (31) for each of the first group and second group, the support disk of a group being joined in terms of rotation to the support disk of the other group by means of said connection shaft (32).

9. A transmission according to claim 7 or 8, when dependent on claim 2, wherein said connection shaft (32) comprises a seat (33) in correspondence of which said connection element (76) slides.

10. A transmission (100) according to any one of the preceding claims, wherein said input member (1) comprises a pinion (1A) which is arranged in the region of an end of said shaft (10A).

11. A transmission (100) according to any one of the preceding claims, wherein said output member (2) comprises connection means (2A) with respect to a drive wheel, said connection means (2A) preferably comprising a ring which is provided with holes for fixing spokes for spoked wheels.

12. A transmission (100) according to any one of the preceding claims, wherein said planetary gears are formed by elliptical gear mechanisms, said input member comprising an additional elliptical gear mechanism (11) which is configured so as to transmit the motion being input to said planetary gears.

13. A transmission (100) according to any one of the preceding claims, wherein said connecting rod element (51) comprises a flexible or folding arm (52) which is connected to said first member (41) in the region of a circumferential portion (41A) thereof.

14. A transmission (100) according to the preceding claim, wherein said arm (52) is formed by a chain.

15. A transmission (100) according to any one of the preceding claims, wherein each of said second members (42) rotates with respect to a respective rotation axis (X") which is parallel with said main rotation axis (X) and which is different from said main rotation axis and from said hinging axes (P) and rotation axis (X') of the planetary gear (3).
